Europäisches Patentamt

European Patent Office

Office européen des brevets

(11) Veröffentlichungsnummer: **0 207 927**
**B1**

(12) **EUROPÄISCHE PATENTSCHRIFT**

(45) Veröffentlichungstag der Patentschrift: **08.08.90**

(51) Int. Cl.⁵: **B 01 D 45/12, B 04 C 5/13**

(21) Anmeldenummer: **86890153.9**

(22) Anmeldetag: **23.05.86**

(54) **Einrichtung zum Abtrennen von Staub aus Gasen.**

(73) Patentinhaber: **VOEST-ALPINE Aktiengesellschaft Friedrichstrasse 4 A-1011 Wien (AT)**

(72) Erfinder: **Brunnmair, Erwin, Dipl.-Ing. Harterfeldstrasse 7 A-4060 Leonding (AT)**
Erfinder: **Faltejsek, Karl, Dipl.-Ing. Lüfteneggerstrasse 6 A-4020 Linz (AT)**

(74) Vertreter: **Haffner, Thomas M., Dr. et al Patentanwaltskanzlei Dipl.-Ing. Adolf Kretschmer Dr. Thomas M. Haffner Schottengasse 3a A-1014 Wien (AT)**

(30) Priorität: **28.05.85 AT 1599/85**

(43) Veröffentlichungstag der Anmeldung: **07.01.87 Patentblatt 87/02**

(45) Bekanntmachung des Hinweises auf die Patenterteilung: **08.08.90 Patentblatt 90/32**

(84) Benannte Vertragsstaaten: **BE CH DE FR GB IT LI LU NL SE**

(56) Entgegenhaltungen:
**BE-A- 535 127**
**FR-A- 843 758**
**FR-A-1 054 540**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung bezieht sich auf eine Einrichtung zum Abtrennen von Staub aus Gasen, bei welcher die Gase in einem im wesentlichen rohrförmigen und/oder konischen Gehäuse in rotierende Strömung versetzt werden, wobei ein sich in Achsrichtung des Gehäuses erstreckender Leitkörper vorgesehen ist, die Austragsöffnung für das Reingas von einem den Leitkörper umgebenden Spalt gebildet ist und an der der Austragsöffnung für den Staub gegenüberliegenden Stirnseite des Gehäuses angeordnet ist, und zwischen der Austragsöffnung für den Staub und dem Leitkörper eine radial einwärts gerichtete Leitfläche angeordnet ist.

Für die Abscheidung von Staub sind eine Reihe von Staubabscheidern, wie beispielsweise Elektrofilter und Gewebefilter bekannt, welche neben einem oft erheblichen Wartungsaufwand den Nachteil aufweisen, daß eine Heißgasentstaubung nicht ohne vorangehenden Wärmetauscher möglich ist. Fliehkraftentstauber, wie z.B. Zyklone, können ohne weiteres auch mit heißen Gasen beaufschlagt werden. Das Abscheidevermögen von Fliehkraftentstaubern ist aber im besonderen für kleine Korngrößen ungünstig und bei den bekannten Einrichtungen liegt das Grenztrennkorn etwa bei 20 µm. Zyklone werden somit zumeist nur als Vorabscheider eingesetzt. Die Bemühungen, das Grenztrennkorn bei derartigen Zyklonen zu erniedrigen, zielen darauf ab, größere Verschiebekräfte auf die einzelnen Partikel einwirken zu lassen. Zu diesem Zweck müßten höhere Zentrifugalkräfte durch Steigerung der Drehgeschwindigkeit der Strömung erzeugt werden, was jedoch durch physikalische Faktoren wie abscheidehemmende Turbulenzneigung bei höheren Geschwindigkeiten begrenzt wird. Weiters werden bei Steigerung der Drehgeschwindigkeit Sekundärströmungen beobachtet, welche bei Zyklonen am Deckel zum Auftreten von Staubstößen führen, was ebenfalls zu einer Verschlechterung der Abscheidewirkung führt.

Entscheidend auf die Begrenzung der Abscheideleistung wirkt sich jedoch der bei der Fliehkraftabscheidung bisher angewendete Abscheidemechanismus aus. Dieser ist prinzipmäßig bedingt. Die durch die Gehäuseformgebung beim Zyklon zur Wirkung kommende Wirbel-Senken-Strömung erzeugt zum einen die auf die zu verschiebenden Staubpartikel wirkende erwünschte Zentrifugalkraft, zum anderen aber durch die Strömungssenke am Ort der Staubaustragung eine der Zentrifugalkraft entgegen gerichtet angreifende Stokessche Schleppkraft. Diese Schleppkraft nimmt bei kugelförmig angenommenen Partikeln und laminarer Partikelumströmung proportional dem Partikeldurchmesser ab, während die Zentrifugalkraft mit der dritten Potenz des Partikeldurchmessers abnimmt. Durch diesen an einem Staubkorn angreifenden Kräftemechanismus wird die Abscheidung feinster Teilchen im Zyklon verhindert. Die im Zyklonkonus zum Staubsammelbunker hin gerichtete Schraubenströmung ist dort nützlich, weil sie die an die Wand verschobenen Partikel in Richtung zur Bunkeröffnung transportiert. Kurz vor deren Erreichen kehrt die Schraubenströmung jedoch zur Zyklonachse hin um und führt dadurch zu einem örtlichen Anwachsen der radial einwärts gerichteten Strömungsgeschwindigkeit im Bereich der höchsten Staubkonzentration im Zyklon. Nachteiligerweise sind dort die Drehgeschwindigkeiten am geringsten. Das führt wiederum zu einer Verschlechterung der Abscheideleistung.

Aus der DE-C-28 32 097 ist bereits ein Fliehkraftabscheider bekanntgeworden, bei welchem ein Strom eines mit suspendierten Partikeln beladenen Mediums tangential einer Abscheidekammer zugeführt wird und in der Folge ein Austrag des leichteren Anteils durch zwei in das Wirbelkammergehäuse ragende Tauchrohre erfolgt. Hiebei wird nur ein Teil des zugeführten Rohgasstromes durch die Tauchrohre abgesaugt und der nicht abgesaugte Teil in der Wirbelkammer zur Ausbildung eines stehenden Wirbels herangezogen.

Aus der US-A-3 885 933 ist eine nach dem Zyklonabscheiderprinzip arbeitende zweistufige Klassiereinrichtung bekannt geworden, bei welcher die Strömungsrichtungsumkehr gegen einen Staudruck in einem Staubaustragskonus erfolgt und der Reingasabzug unmittelbar den Staubaustragsöffnungen benachbart ist.

Aus der FR-C 843 758 ist eine Einrichtung der eingangs genannten Art bekanntgeworden, bei welcher die eintretenden staubbeladenen Gase über an der Eintrittsseite vorgesehene Profilierungen in eine rotierende Strömung versetzt werden und wobei am dem Eintritt gegenüberliegenden Ende des im wesentlichen rohrförmigen Behälters ein von einer schräg zur Behälterachse verlaufenden Leitfläche begrenzter Staubaustragsschlitz am Behältermantel vorgesehen ist. Der Austrag des nach Umlenkung an der Leitfläche gereinigten Gases erfolgt dabei über ein im Zentrum des Behälters vorgesehenes Rohr. Eine ähnliche Einrichtung ist auch der FR-C 1 054 540 zu entnehmen, wobei der Staubaustragsschlitz von einem sich konisch verjüngenden Behältermantel begrenzt wird. Nachteilig bei bekannten Einrichtungen ist die Tatsache, daß im Bereich des Staubaustragsschlitzes bei der Umlenkung des staubbeladenen Gasstromes im Staubsammelraum ein Überdruck entsteht, welcher zu einem unerwünschten Rückströmen oder zu einer Behinderung des Austrages führen kann.

Die Erfindung zielt nun darauf ab, eine Einrichtung der eingangs genannten Art zu schaffen, mit welcher die Grenztrennkorngröße gegenüber bekannten Fliehkraftabscheidern herabgesetzt werden kann und mit welcher bei geringem Energieaufwand eine weitestgehende Abtrennung von Staub aus Gasen durchgeführt werden kann. Zur Lösung dieser Aufgabe besteht die Erfindung im wesentlichen darin, daß die die Staubaustragsöffnungen tragende Stirnfläche, insbesondere die zum Leitkörper ansteigende Fläche, nahe dem Leitkörper Durchbrechungen, insbesondere Entlastungsbohrungen, aufweist. Auf diese Weise wird ein vergleichsweise einfacher Aufbau erzielt. Die staubbeladenen Gase werden in konventioneller Weise tangential zugeführt, wodurch sich die rotierende Strömung ergibt. Ebenso wie bei bekannten Zyklonen ergibt sich somit eine Abscheidung durch Zentrifugalkraft und es werden Stokessche Schleppkräfte beobachtet. Die Kräfte treten jedoch in anderen Gebieten auf, wobei mitgerissene Teilchen nur bis in die Nähe der Außenwand des Leitkörpers gelangen können, wo aber neuerlich eine hohe Winkelgeschwindigkeit und damit eine große Fliehkraft auftritt. Es wird eine Sekundärströmung vom Gehäuse über den Boden zum Leitkörper ausgebildet, wobei diese Strömung in dünnen Schichten am Leitkörper in entgegengesetzter Richtung hochsteigt. Da die Drehgeschwindigkeit bei der Umlenkung über die ebene Wirbel-Senken-Strömung zum Leitkörper hin zunimmt, ergibt sich zwischen der auf größerem Radius befindlichen Austragsöffnung für die Staubabscheidung und der Außenwand des Leitkörpers ein Druckunterschied, der dadurch, daß die die Staubaustragsöffnungen tragende Stirnfläche, insbesondere die zum Leitkörper ansteigende Fläche, nahe dem Leitkörper Durchbrechungen, insbesondere Entlastungsbohrungen, aufweist, zur Verbesserung der Staubaustragung herangezogen werden kann. Auf diese Weise wird ein die Staubaustragung begünstigender Gasvolumenstrom erzielt, wobei weitgehend reines Gas aus dem an die Staubaustragsöffnung angeschlossenen Staubaufnahmebunker angesaugt wird. Durch diese Maßnahme wird darüberhinaus ein Überdruck im Staubsack und damit ein gegebenenfalls auftretendes Rückströmen des Staubes verhindert und eine gleichmäßige Abscheidung von feinstem Staub und ein sicheres Austragen desselben sichergestellt. Die Absaugmündung ist weiters als den Leitkörper umgebender Spalt ausgebildet und es kann in diesem Spalt eine Drallenergierückgewinnung realisiert werden. Über die einwärts gerichtete Leitfläche mit den Durchbrechungen nahe dem Leitkörper verläuft die Schichtströmung als ebene Wirbel-Senken-Strömung mit spiralförmigen Stromlinien. Die Schraubenströmung wird am Gehäuse bei der Überführung in die ebene Wirbel-Senken-Strömung vom Großteil des darin befindlichen Staubes getrennt und dieser Staub kann durch einen Staubaustragschlitz abgeführt werden. Die Abtrennung erfolgt auf Grund der höheren Massenträgheit der Staubpartikelchen bei der Strömungsumlenkung. Zum Leitkörper hin nimmt die Drehgeschwindigkeit wiederum zu und die Strömung längs des Leitkörpers erfolgt wiederum mit schraubenförmigen Stromlinien bis zur Austragsöffnung für das Reingas, wobei in diesem Bereich auf Grund der höheren Fliehkraft eine Feinabtrennzone ausgebildet wird. In dieser Feinabtrennzone wirkt infolge der Schraubenströmung in radialer Richtung eine Zentrifugalkraft als Verschiebungskraft, wobei in dieser Zone keine Strömungskraft durch die Wirkung der Senke mehr entgegenwirkt. Für eine maximale Länge dieser Feinabtrennzone ist die Gasaustrittssöffnung an der der Austragsöffnung für den Staub gegenüberliegenden Stirnseite des Gehäuses angeordnet.

In konstruktiv überaus einfacher Weise kann die Austragsöffnung für das Reingas von einem den Leitkörper unter Ausbildung des Spaltes übergreifenden Rohr gebildet sein. Ein derartiges übergreifendes Rohr definiert zwischen seiner Innenwand und der Außenwand des Leitkörpers den Spalt für die Absaugung des Reingases und ermöglicht den Einbau von Einrichtungen zur Rückgewinnung der Drallenergie. Zu diesem Zweck können beispielsweise zwischen Leitkörper und Rohr Leitschaufeln angeordnet sein. Die Unterkante des den Leitkörper übergreifenden Rohres ist mit Vorzug innerhalb des Behälters angeordnet.

Eine sehr kompakte Konstruktion ergibt sich, wenn, wie es einer bevorzugten Weiterbildung der erfindungsgemäßen Einrichtung entspricht, der Leitkörper hohl bzw. rohrförmig ausgebildet ist und das den Leitkörper übergreifende Rohr mit den Gasstrom zur Achse des Leitkörpers umlenkenden Schaufeln ausgestattet ist.

Die Staubaustragsöffnungen sind am Grund der Senke vorgesehen und mit Vorteil in der den Boden bildenden Stirnwand des Gehäuses, insbesondere als der Gehäuseinnenwand benachbarter Spalt, ausgebildet. In diesem Bereich erfolgt die Umlenkung der tangentialen Strömung des staubbeladenen Gases in eine ebene Wirbel-Senken-Strömung mit spiralförmigen Stromlinien, wobei bei der Überführung in diese ebene Wirbel-Senken-Strömung der Großteil des im Gas enthaltenen Staubes durch den Staubaustragschlitz ausgetragen wird.

Mit Vorteil kann hiebei die die Staubaustragsöffnungen aufweisende Stirnwand eine zum Leitkörper hin ansteigende Fläche aufweisen, wobei die Staubaustragsöffnung im tiefsten Bereich der ansteigenden Fläche, vorzugsweise radial an diese Fläche anschließend ausgebildet ist.

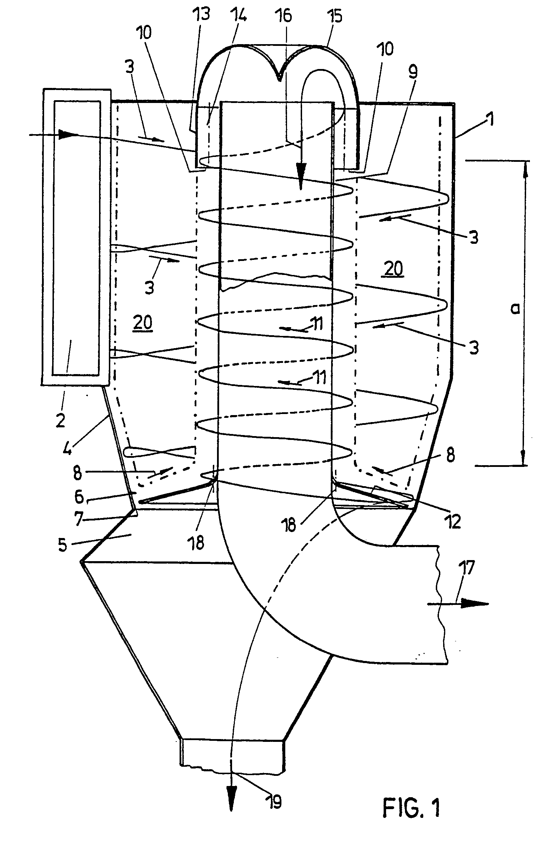

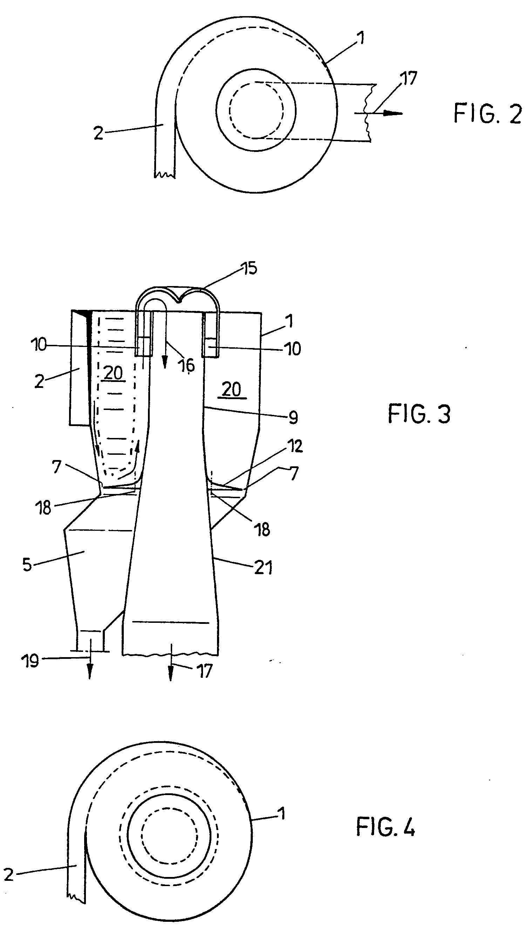

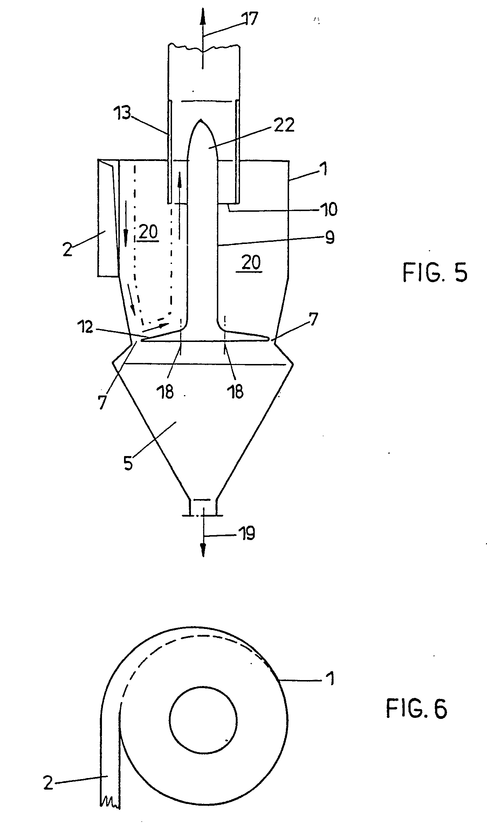

Die Erfindung wird nachfolgend an Hand von in der Zeichnung dargestellten Ausführungsbeispielen näher erläutert. In dieser zeigen: Fig. 1 einen Axialschnitt durch eine erfindungsgemäße Einrichtung, Fig. 2 eine Draufsicht auf eine Einrichtung nach Fig. 1, Fig. 3 eine abgewandelte Einrichtung im analogen Schnitt wie Fig. 1, Fig. 4 eine Draufsicht auf die Ausbildung nach Fig. 3, Fig. 5 eine weitere abgewandelte Ausbildung einer Einrichtung im Axialschnitt entsprechend der Fig. 1, Fig. 6 eine Draufsicht auf eine Einrichtung nach nach Fig. 5, Fig. 7 eine weitere Ausbildung im Axialschnitt und Fig. 8 einen Schnitt nach der Linie VIII-VIII der Fig. 7.

Bei der Ausbildung nach Fig. 1 ist eine Einrichtung zum Abtrennen von Staub aus Gasen dargestellt, welche ein Gehäuse 1 aufweist. Die Gaszufuhr erfolgt über einen Zufuhrschlitz 2 in im wesentlichen tangentialer Richtung an das Gehäuse 1, wobei die den staubbeladenen Gasen vermittelte Strömungsrichtung durch die Pfeile 3 angedeutet ist. Das staubbeladene Gas gelangt über einen ersten zylindrischen Abschnitt in einen konisch zulaufenden Abschnitt 4 des Gehäuses, wobei in diesem Abschnitt 4 die Drehgeschwindigkeit zunimmt.

An den Boden des Gehäuses 1 ist ein Staubaufnahmebunker 5 angeschlossen. Die Staubaustragsöffnungen sind als der Innenwand 6 des Gehäuses 1 benachbarte Ringschlitze 7 ausgebildet und befinden sich an derjenigen Stelle, an welcher die Gase in Richtung der pfeile 8 umgelenkt werden. In diesem Bereich der Umlenkung der Strömung, in welcher die in Umfangsrichtung verlaufende Strömung in eine ebene Wirbel-Senken-Strömung umgelenkt wird, gelangen die Staubteilchen auf Grund der höheren Massenträgheitskräfte durch die Staubaustragschlitze 7 in den Staubaufnahmebunker, wohingegen ein weitgehend vom Staub befreites Gas in Richtung der Pfeile 8 zu einem zylindrischen Leitkörper 9 umgelenkt wird und in der Folge an diesem Leitkörper 9 in Richtung der Reingasaustrittsöffnungen 10 hochsteigt. Der Leitkörper 9 ist als im wesentlichen zylindrisches Rohr ausgebildet und die Strömung längs dieses Leitkörpers 9 verläuft in engeren Schraubenlinien in Übereinstimmung mit den Pfeilen 11.

Für die Umlenkung der Strömung sind Leiteinrichtungen 12 am Boden des Gehäuses 1 vorgesehen. Durch die nach der Umlenkung nahe dem Leitkörper 9 auftretende höhere Winkelgeschwindigkeit wirken nunmehr auf die verbleibenden im Gasstrom mitgerissenen Teilchen höhere Verschiebekräfte, welche diese Teilchen in Richtung zur Innenwand 7 des Gehäuses 1 bewegen. Die Höhe dieser Zone mit größerer Winkelgeschwindigkeit ist mit a angegeben und entspricht der Höhe einer Feinabtrennzone, in welcher eine zusätzliche Abtrennung von feinen Staubpartikeln erfolgt.

Der Reingasaustrag erfolgt über einen den rohrförmigen Leitkörper 9 umgebenden Ringschlitz. Dieser Ringschlitz wird durch ein den Leitkörper 9 übergreifendes Rohr 13 begrenzt und zwischen der Innenwand dieses Rohres 13 und der Außenwand des rohrförmigen Leitkörpers können Einrichtungen 14 für die Drallenergierückgewinnung angeordnet sein. Die durch die Austragsöffnungen 10 abgeführten Reingase werden über Schaufelbereiche 15 in Richtung des Pfeiles 16 umgelenkt und gelangen in das Innere des hohlen Leitkörpers 9 und können in Richtung der Pfeile 17 abgezogen werden.

Um mit Sicherheit zu verhindern, daß im Staubaustragbunker 5 im Betrieb ein Überdruck entsteht, sind in den Leitflächen 12 nahe dem rohrförmigen Leitkörper 9 erfindungs gemäß Entlastungsbohrungen 18 angeordnet. Auf Grund unterschiedlicher Druckverluste der Gasströmungen oberhalb bzw. unterhalb der Leitflächen 12 wird über diese Entlastungsbohrungen 18 Reingas aus dem Staubaustragbunker 5 wiederum rückgesaugt, so daß das Austragen von Staub über die Staubaustragschlitze 7 begünstigt wird und gleichzeitig ein Überdruck im Staubaustragbunker mit Sicherheit vermieden wird. Der Staub kann in der Folge, wie schematisch durch den Pfeil 19 angedeutet, am Unterende des Staubaustragbunkers 5 abgezogen werden.

In Fig. 2 ist die Einrichtung nach Fig. 1 in der Draufsicht dargestellt. Zur Funktion der Einrichtung nach den Fig. 1 und 2 ist festzuhalten, daß sich zwischen der Feinabtrennzone in unmittelbarer Nachbarschaft des rohrförmigen Leitkörpers 9 und dem Gasvolumenstrom längs der Innenwand des Gehäuses 1 ein Bereich 20 ausbildet, welcher als stehender Wirbel bezeichnet werden kann. Innerhalb dieses stehenden Wirbels ist die Drehgeschwindigkeitsverteilung vom Radius abhängig. Das über die Rohgaseintrittsöffnung 2 eingespeiste Gas strömt zunächst schraubenförmig bis in die Nähe des Staubaustrittsschlitzes und verliert auf Grund der dort stattfindenden Umlenkung einen Großteil des mitgetragenen Staubes. Nach dieser Umlenkung setzt sich die Strömung als ebene Wirbelsenkungsströmung mit spiralförmigen Stromfäden entlang der Leitflächen 12 in Richtung des Leitkörpers 9 fort, um dort neuerlich umgelenkt zu werden und eine nach oben gerichtete Schraubenströmung auszubilden. Die durch die höhere Drehgeschwindigkeit nach erneuter Umlenkung parallel zur Achse des Leitkörpers 9 im Bereich der Feinabtrennzone auf noch mitgetragenen Teilchen ausgeübte Zentrifugalkraft führt zu einer Verschiebung der Teilchen in den stehenden Wirbel 20. Alle in diesem Wirbel gelangten Teilchen werden lediglich noch in radialer Richtung weiterverschoben, bis sie in die Schraubenströmung an der Innenwand des Gehäuses 1 gelangen. Eine axiale Strömungskomponente innerhalb des stehenden Wirbels 20 tritt nicht auf, womit eine präzise Abtrennung auch leichter Teilchen ermöglicht wird.

Die Ausbildung nach den Fig. 3 und 4 unterscheidet sich von der Ausbildung nach Fig. 1 und 2 lediglich durch die geänderte Ausbildung der Reingasableitung. Der rohrförmige Leitkörper 9 weist neben einem im wesentlichen zylindrischen oberen den Absaugschlitzen 10 benachbarten Bereich einen sich konisch erweiternden Bereich 21 auf, welcher zum einen die stoßfreie Umlenkung in die aufsteigende Schraubenströmung begünstigt und zum andern innerhalb der Reingasableitung als Diffusor wirksam ist. Zwischen dem den Leitkörper 9 übergreifenden den Reingasaustragschlitz 10 begrenzenden Rohr, dessen Unterkante ebenso wie bei der Ausbildung nach Fig. 1 und 2 in das Innere des Gehäuses 1 eintaucht, und an der Außenwand des rohrförmigen Leitkörpers 9 sind wiederum Leitschaufeln zur Drallenergierückgewinnung angeordnet.

Bei der Ausbildung nach Fig. 5 und 6 geht der rohrförmige Leitkörper 9 im Inneren des diesen Leitkörper 9 übergreifenden Rohres 13 in einen Diffusorkegel 22 über. Die Reingasabsaugung erfolgt wiederum über den zwischen dem Rohr 13 und dem Leitkörper 9 ausgebildeten Ringspalt 10, in welchem Einrichtungen zur Drallenergierückgewinnung angeordnet sind. Im übrigen entspricht auch die Ausbildung nach Fig. 5 und 6 in ihrer Funktion den zuvor beschriebenen Ausbildungen. Der Übersichtlichkeit halber wurde bei der Darstellung nach Fig. 5 lediglich die axiale Komponente der Strömung durch Pfeile angedeutet, wobei die in axialer Richtung nahe der Innenwand des Gehäuses 1 abwärts gerichtete Strömung naturgemäß eine Schraubenlinienströmung ist, welche im Bereich der Leitflächen 12 in eine ebene Spirale umgelenkt wird und die längs des rohrförmigen Leitkörpers 9 aufwärtsgerichtete Strömung eine Schraubenlinienströmung mit entsprechend vergrößerter Winkelgeschwindigkeit darstellt.

## Patentansprüche

1. Einrichtung zum Abtrennen von Staub aus Gasen, bei welcher die Gase in einem im wesentlichen rohrförmigen und/oder konischen Gehäuse (1) in rotierende Strömung versetzt werden, wobei ein sich in Achsrichtung des Gehäuses (1) erstreckender Leitkörper (9) vorgesehen ist, die Austragsöffnung (10) für das Reingas von einem den Leitkörper (9) umgebenden Spalt gebildet ist und an der der Austragsöffnung (7) für den Staub gegenüberliegenden Stirnseite des Gehäuses (1) angeordnet ist, und zwischen der Austragsöffnung (7) für den Staub und dem Leitkörper (9) eine radial einwärts gerichtete Leitfläche angeordnet ist, dadurch gekennzeichnet, daß die die Staubaustragsöffnungen (7) tragende Stirnfläche, nahe dem Leitkörper (9) Durchbrechungen, insbesondere Entlastungsbohrungen (18), aufweist.

2. Einrichtung nach Anspruch 1, dadurch gekennzeichnet, daß die Austragsöffnung (10) für das Reingas von einem den Leitkörper (9) unter Ausbildung des Spaltes übergreifenden Rohr (13) gebildet ist.

3. Einrichtung nach Anspruch 1 oder 2, dadurch gekennzeichnet, daß die Unterkante des den Leitkörper (9) übergreifenden Rohres (13) innerhalb des Behälters angeordnet ist.

4. Einrichtung nach einem der Ansprüche 1, 2 oder 3, dadurch gekennzeichnet, daß zwischen Leitkörper (9) und Rohr (13) Leitschaufeln (12) angeordnet sind.

5. Einrichtung nach einem der Ansprüche 1 bis 4, dadurch gekennzeichnet, daß der Leitkörper (9) hohl bzw. rohrförmig ausgebildet ist und daß das den Leitkörper (9) übergreifende Rohr (13) mit den Gasstrom zur Achse des Leitkörpers umlenkenden Schaufeln (15) ausgestattet ist.

6. Einrichtung nach einem der Ansprüche 1 bis 5, dadurch gekennzeichnet, daß die Staubaustragsöffnungen in einer Stirnwand des Gehäuses (1) insbesondere von einem der Gehäuseinnenwand (7) benachbarten Spalt (7) gebildet sind.

7. Einrichtung nach einem der Ansprüche 1 bis 6, dadurch gekennzeichnet, daß die die Staubaustragsöffnungen (7) aufweisende Stirnwand eine zum Leitkörper (9) hin ansteigende Leitfläche aufweist, wobei die Staubaustragsöffnung (7) im tiefsten Bereich der ansteigenden Leitfläche, vorzugsweise radial an diese Leitfläche anschließend ausgebildet ist.

## Revendications

1. Dispositif de séparation des poussières contenues dans des gaz, dans lequel on soumet les gaz à un écoulement en rotation, dans une enveloppe (1) à peu près tubulaire et/ou conique, un corps de guidage (9), s'étendant dans la direction axiale de l'enveloppe (1) étant prévu, l'ouverture de sortie (10) du gaz épuré étant formée par une fente entourant le corps de guidage (9) et étant située sur la face frontale de l'enveloppe (1), opposée à l'ouverture de sortie (7) des poussières, et une surface de guidage, dirigée radialement vers l'intérieur, étant placée entre l'ouverture de sortie (7) des poussières et le corps de guidage (9), caractérisé en ce que la face frontale portant les ouvertures de sortie des poussières (7) présente des ajours, en particulier des perçages de décharge (18), à proximité du corps de guidage (9).

2. Dispositif selon la revendication 1, caractérisé en ce que l'ouverture de sortie (10) du gaz épuré est formée par un tube (13) passant sur le corps de guidage (9) en formant la fente.

3. Dispositif selon la revendication 1 ou 2, caractérisé en ce que le bord inférieur du tube (13) passant sur le corps de guidage (9), est placé à l'intérieur du conteneur.

4. Dispositif selon une quelconque des revendications 1, 2 ou 3, caractérisé en ce qu'on place des pales de guidage (12), entre le corps de guidage (9) et le tube (13).

5. Dispositif selon une quelconque des revendications 1 à 4, caractérisé en ce que le corps de guidage (9) est creux ou tubulaire et en ce que le tube (13), passant sur le corps de guidage (9), est équipé des pales (15) déviant le flux de gaz vers l'axe du corps de guidage.

6. Dispositif selon une quelconque des revendications 1 à 5, caractérisé en ce que les ouvertures de sorties des poussières sont formées dans une paroi frontale de l'enveloppe (1), en particulier par une fente (7), voisine de la paroi intérieure de l'enveloppe (6).

7. Dispositif selon une quelconque des revendications 1 à 6, caractérisé en ce que la paroi frontale, présentant les ouvertures de sortie des poussières (7), comporte une surface de guidage montant vers le corps de guidage (9), l'ouverture de sortie des poussières (7) étant pratiquée dans la région la plus basse de la surface de guidage montante, de préférence dans le prolongement radial de celle-ci.

## Claims

1. An apparatus for separating dust from gases, in which the gases are displaced along a rotary flow path in a substantially tubular and/or conical housing (1), wherein there is provided a guide member (9) extending in the axial direction of the housing (1), the discharge opening (10) for the clean gas is formed by a clearance surrounding the guide member (9) and is disposed at the opposite end of the housing (1) to the discharge opening (7) for the dust, and a radially inwardly directed guide surface is disposed between the discharge opening (7) for the dust and the guide member (9), characterised in that the end providing the dust discharge openings (7) has perforations near to the guide member (9), in particular relief bores (18).

2. An apparatus according to Claim 1, characterised in that the discharge opening (10) for the clean gas comprises a tube (13) overlapping the guide member (9) to form the clearance.

3. An apparatus according to Claim 1 or 2, characterised in that the bottom edge of the tube (13) overlapping the guide member (9) is disposed inside the container.

4. An apparatus according to any of Claims 1, 2 or 3, characterised in that guide vanes (12) [sic] are disposed between the guide member (9) and the tube (13).

5. An apparatus according to any of Claims 1 to 4, characterised in that the guide member (9) is hollow or tubular, and in that the tube (13) overlapping the guide member (9) is provided with vanes (15) deflecting the gas flow towards the axis of the guide member.

6. An apparatus according to any of Claims 1 to 5, characterised in that the dust discharge openings are formed in an end wall of the housing (1), in particular by a clearance (7) adjacent the housing inner wall (6).

7. An apparatus according to any of Claims 1 to 6, characterised in that the end wall provided with the dust discharge openings (7) has a guide surface ascending towards the guide member (9), the dust discharge opening (7) being formed in the lowest region of the ascending guide surface, preferably radially adjacent this guide surface.

FIG. 1

FIG. 2

FIG. 3

FIG. 4

FIG. 5

FIG. 6